# FASCICULE DE BREVET EUROPEEN

(11) **EP 0 340 102 B1**
(45) Date de publication et mention de la délivrance du brevet: **23.06.1993**
(21) Numéro de dépôt: 89401175.8
(22) Date de dépôt: 25.04.1989
(51) Int. Cl.: B65H 81/04, B29C 53/58

(54) **Dispositif pour appliquer un enroulement filamentaire sur un support de forme quelconque et machine à bobiner universelle en comportant application**
Vorrichtung zum Aufwickeln von fadenförmigem Material auf einen Wickeldorn beliebiger Form und dieselbe verwendende Aufwickelmaschine
Device for winding filamentary material onto a support of any shape, and a universal winding machine using the device

(30) Priorité: 25.04.1988 FR 8805439
(43) Date de publication de la demande: 02.11.1989
(73) Titulaire: AEROSPATIALE Société Nationale Industrielle, 75781 Paris Cédex 16 (FR)
(72) Inventeur: Darrieux, Jean-Louis, F-33700 Merignac (FR)
(74) Mandataire: Lhuillier, René

(56) Documents cités:
- FR-A- 2 537 556
- US-A- 2 819 850
- US-A- 2 820 598

## Description

L'invention concerne un dispositif pour appliquer un enroulement filamentaire sur un support de forme quelconque, mettant en oeuvre au moins deux bras robots pilotés par un dispositif préprogrammé ainsi qu'une machine à bobiner universelle en comportant application.

Une technique de l'enroulement filamentaire consiste à faire décrire à une tête de distribution de fibres ou fils synthétiques ou autres, préimprégnés ou non, une trajectoire programmée à proximité d'un support de manière que ces fibres soient posées sous tension à l'endroit voulu sur celui-ci, en se dévidant de bobines de stockage. L'enroulement filamentaire est suivi d'une imprégnation de résine lorsque les fibres ne sont pas préimprégnées, et le matériau composite final est obtenu après polymérisation de l'ensemble fibres-résine. Cet enroulement filamentaire est assuré par exemple sur un mandrin plein ou creux dont la forme extérieure correspond à la forme intérieure des pièces creuses à réaliser. Quand ce mandrin est plein, il faut pouvoir le retirer quand la pièce est formée, c'est pourquoi il est souvent réalisé en matériau aggloméré, durcissable dans les conditions atmosphériques ambiantes, mais destructible après cycles thermiques par exemple par voie chimique. Quand le mandrin est creux, il est habituellement formé d'une enveloppe rigide, métallique ou autre conservée à l'intérieur de la pièce après polymérisation. Pour l'enroulement, ledit mandrin est disposé sur une machine et est généralement animé d'un mouvement de rotation entraînant, en l'enroulant sur lui-même, la fibre venant d'une bobine, elle-même animée des mouvements complémentaires nécessaires au revêtement dudit mandrin. Les pièces obtenues avec des machines de ce genre sont des enveloppes de forme sphérique ou cylindrique à fonds bombés ayant un ou deux orifices nécessaires à leur utilisation et par lesquels passe l'arbre de soutien du mandrin lors de l'enroulement filamentaire.

Pour le production de tubes en matériaux composites, on connaît également des machines qui utilisent un cadre tournant autour d'un tube animé d'un mouvement d'avance par rapport audit cadre. Ces machines peuvent donc assurer des enroulements autour de pièces à tendance sphériques ou tubulaires mais ne peuvent facilement enrouler des pièces de forme toroïdale. Pour l'enroulement de filaments autour d'un élément toroïdal on connaît un dispositif qui consiste à faire supporter ledit élément toroïdal par un train de rouleaux sur lesquels il tourne autour de son axe, et à faire tourner un dispositif de guidage de la matière autour de la surface de l'élément toroïdal, un mouvement relatif étant provoqué entre le dispositif de guidage et l'élément toroïdal pour que la matière soit enroulée, un dispositif étant prévu pour compenser le changement de direction de l'élément toroïdal par suite de l'enroulement de la matière allongée sur ce dernier, comme décrit dans le FR A 2 225 372.

Dans ce genre de machine à bobiner les mandrins toriques il y a nécessairement un cadre porteur de bobines de fibres qui pénètre à l'intérieur du tore à la manière de deux maillons successifs d'une chaîne. Pour la mise en oeuvre de l'enroulement il faut donc nécessairement ouvrir ce cadre pour le faire rentrer dans le tore et ensuite l'y ajuster avant de recommencer l'action inverse en fin d'enroulement. Cela implique un montage difficile et des moyens annexes lourds et volumineux. De plus, s'il se présente un obstacle sur le support torique par exemple une traverse disposée diamétralement, il faut interrompre le bobinage et déplacer le cadre avant de reprendre le bobinage de l'autre côté de l'obstacle. Par conséquent si on recherche une pièce de ce type ou si d'une façon générale on veut obtenir par enroulement filamentaire une pièce comportant un ou des obstacles à l'enroulement en continu, l'utilisation d'une tête ou d'un cadre de distribution s'avère pratiquement impossible. On connaît aussi par le FR-A 2 537 556 un dispositif adapté à réaliser des bobinages sur des supports toriques qui consiste à déplacer en translation axiale une bobine distributrice à l'intérieur du support torique à l'aide d'un bras mobile, à recevoir et déplacer à l'aide d'un second mécanisme mobile, ladite bobine vers le haut pour qu'elle soit reprise par un troisième mécanisme utilisant un bras identique au premier et déplaçable en translation parallèlement à l'extérieur du support torique, la bobine étant enfin prise en charge par un quatrième organe qui la replace sur le bras original.

On imagine aisément que pour assurer un bobinage correct sous tension constante à partir de ces quatre mécanismes porteurs de bobines, qui doivent se déplacer chacun selon une trajectoire précise, les problèmes de synchronisation ne soient pas simples à résoudre, sans parler de la complexité des agencements de ces mécanismes.

En outre avec les machines précédemment décrites, il est difficile de passer d'une pièce à l'autre si celles-ci ne sont pas de la même forme et de la même dimension, sans modifier ou changer le cadre et même le support de mandrin. Enfin les éléments toroïdaux en question doivent avoir au moins leur forme extérieure régulière pour pouvoir tourner aisément sur leurs rouleaux supports pendant l'opération d'enroulement. Ces machines conviennent donc pour réaliser des séries de pièce toroïdales identiques mais sont évidemment trop complexes pour être utilisées pour former par exemple des assemblages de pièces tubulaires. Inversement les machines évoquées plus haut destinées à former des pièces à tendance sphérique ou à tendance tubulaire, sont bien incapables de traiter les pièces toroïdales irrégulières ou d'autres pièces de forme quelconque.

C'est pourquoi la Demanderesse a imaginé un dispositif original pour appliquer un bobinage filamentaire, et une machine pour la mise en oeuvre du dispositif, qui permet de réaliser n'importe quelle pièce par enroulement filamentaire en évitant les inconvénients propres aux machines connues. Cette machine par son universalité permet de franchir les obstacles des supports compliqués et donc de réaliser des structures tubulaires diverses, car elle est capable d'assembler des tubes entre eux. De plus puisqu'elle permet de s'affranchir d'un cadre porteur de bobines qui pénètre dans une pièce complexe telle qu'une pièce de forme torique, elle évite les inconvénients inhérents à ce cadre qui sont notamment son ouverture ou sa fermeture par rapport au mandrin ainsi que son inadaptabilité géométrique immédiate à la forme de la pièce souhaitée, et aussi son volume.

Enfin elle ne nécessite pas la mise en oeuvre de beaucoup d'organes mécaniques et va dans le sens d'une simplification et d'une meilleure efficacité.

Un premier objet de la présente invention consiste donc en un dispositif pour appliquer un enroulement filamentaire sur un support de forme quelconque, dans lequel ledit support ou mandrin est disposé sur une machine qui lui imprime éventuellement au moins un mouvement et selon lequel au moins une bobine de distribution de fil est montée sur un support animé d'un mouvement relatif par rapport au mandrin pour que le fil soit enroulé sur ledit support selon une trajectoire résultant de la combinaison du mouvement du mandrin et du mouvement de la bobine de distribution, dispositif selon lequel seulement deux bras de robot pilotés par un système préprogrammé, supportent à tour de rôle une cassette de distribution de fil, l'un des bras pourvu de la cassette effectuant une partie d'un parcours d'enroulement autour du mandrin au terme duquel la cassette est transférée à l'autre bras qui effectue l'autre partie dudit parcours jusqu'au point de départ du premier bras, de telle sorte que le fil soit enroulé sur tout le pourtour de mandrin selon un mouvement qui s'apparente à la mise en place d'une bande de pansement autour d'un membre quand on y fait passer la bande enroulée d'une main dans l'autre en dévidant ladite bande.

Avantageusement chaque bras de robot se termine par une pince à ouverture et fermeture préprogrammée destinée à se saisir d'un des deux axes de préhension de la cassette l'extrémité de chaque bras de robot se terminant par un manchon tournant sur lequel est monté un support tournant de la pince coopérant avec deux parties demi-circulaires susceptibles de s'écarter ou de se rapprocher. On prévoit que les deux bras de robot effectuent ensemble, l'un au-dessus de l'autre, un petit parcours commun en deux zones opposées du parcours d'enroulement complet, pour permettre le transfert de la cassette d'un bras à l'autre sans interrompre l'enroument.

Selon une autre caractéristique particulière de l'invention, on prévoit un poste de liaison pour le collage des fils de cassette, qui consiste en un plateau encadré de deux pinces pouvant appliquer les fils et les maintenir contre le plateau, et qui consiste aussi en un coupe-fil et en un organe applicateur pouvant s'appliquer sur les fils superposés pour assurer leur adhésion.

Un autre objet de la présente invention consiste en une machine à bobiner universelle comportant application du dispositif qui comporte au moins deux bras de robot montés chacun sur un socle support à proximité d'un bâti supportant le mandrin, les bras de robot étant pilotés par un dispositif préprogrammé et supportant à tour de rôle une cassette de distribution de fil pour lui faire effectuer en un mouvement continu le parcours d'enroulement autour dudit mandrin, et comportant également un poste de liaison des fils, permettant d'assurer le collage des fils, des magasins étant prévus pour les cassettes vides ou pleines, desservis par les bras de robot.

D'autres caractéristiques particulières et avantages de l'invention apparaîtront maintenant à la lecture de la description qui va suivre d'exemples non limitatifs de réalisation de l'invention qui font référence aux dessins annexés dans lesquels :
la figure 1 est une vue schématique en plan d'un type de mandrin pouvant recevoir un enroulement selon le dispositif de l'invention ;
la figure 2 représente en perspective le support d'un mandrin toroïdal et la figure 3, schématiquement, ledit mandrin et les bras de robot assurant l'enroulement ;
la figure 4 est une vue en coupe d'une variante de support de mandrin ;
la figure 5 est une vue en perspective à plus grande échelle des extrémités des bras de robot montrant les pinces de préhension.
la figure 6 représente schématiquement en plan les phases d'enroulement à l'aide des deux bras de robot ;
les figures 7 à 9 illustrent schématiquement le fonctionnement du poste de liaison des fils.
la figure 10 représente en perspective une machine à bobiner universelle.

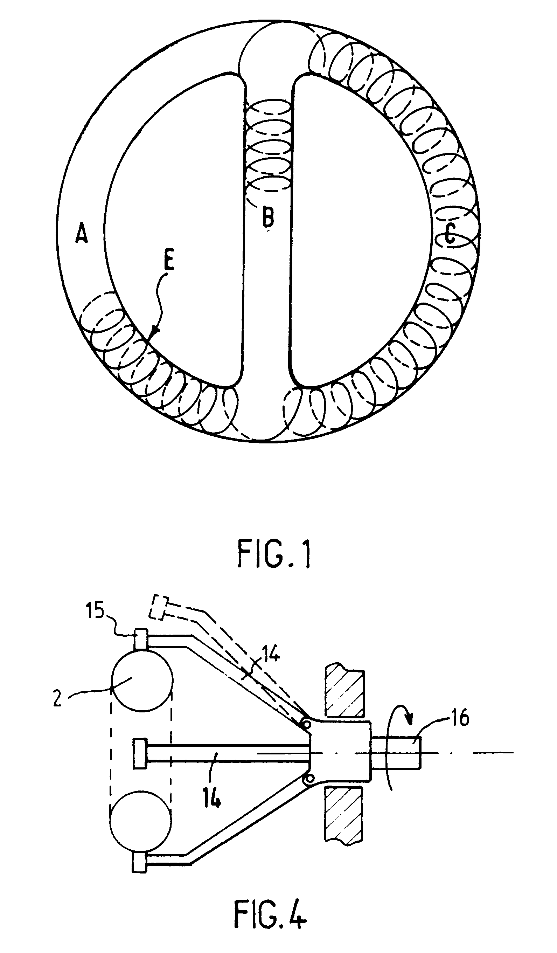

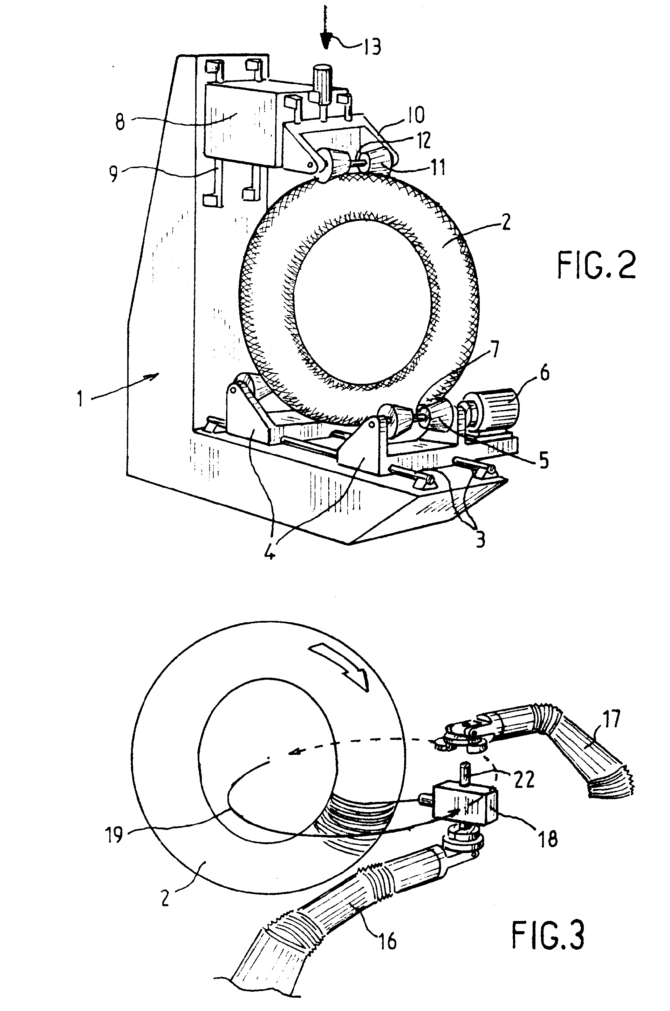

La figure 1 illustre un exemple schématique de structure complexe que les dispositifs et machines connues ne peuvent réaliser par enroulement filamentaire sans des reprises successives de la pièce. Cette pièce toroïdale formée de deux parties en demi-cercle A et C, comporte une partie diamétrale B. On a représenté partiellement un enroulement E que l'on veut effectuer sur la partie A puis sur C puis sur B avant de continuer à nouveau sur A, C etc... Un dispositif à cadre porteur de bobine du genre décrit dans le FR-A 2 225 372, placé autour de la partie A pourra assurer l'enroulement jusqu'a l'obstacle constitué par la traverse B. Pour passer à la partie C il faudra donc ouvrir le cadre pour le déplacer ou utiliser un autre cadre autour de C qui reprendrait le fil au niveau de l'obstacle pour lui faire parcourir la section C. Puis un nouvel obstacle A se présente si l'on veut passer de la section C à travers B, un autre de B vers A etc... . Chaque obstacle nécessite donc une reprise de l'enroulement, qui rend la réalisation techniquement très difficile à l'aide des dispositifs connus. L'invention décrite en référence aux figures 2 à 10 permettrait de réaliser notamment ce type de structure.

On a représenté à la figure 2 un bâti 1 en forme de L servant de support à un mandrin 2 de forme toroïdale. Sur la base du bâti 1 sont montés deux coulisseaux 3 sur lesquels peuvent se déplacer deux étriers 4 portant chacun deux galets 5 entraînés en rotation par un moteur 6 par l'intermédiaire d'un axe 7. On notera que chacun des deux galets 5 peut s'écarter plus ou moins de l'autre en fonction de l'épaisseur du mandrin qu'ils supportent, un mécanisme de rappel automatique non représenté tendant à les rapprocher pour enserrer le mandrin. Sur la partie verticale du bâti 1, est fixée une potence 8 susceptible de se déplacer sur des coulisseaux verticaux 9, potence munie à son extrémité d'un étrier 10 porteur de deux galets d'appui et de guidage 11 également susceptibles de s'écarter l'un de l'autre sur leur axe 12. Le poids de la potence ou une force verticale exercée sur elle selon la flèche 13, maintient une pression constante sur le sommet du mandrin 2, même si sa surface extérieure de roulement n'est pas régulière, du fait de sa mobilité sur les coulisseaux 9. On comprend que, dans cette position, le mandrin repose verticalement sur les jeux de galets 5 qui l'entraînent en rotation, tout en restant maintenu par les galets de guidage supérieurs 11.

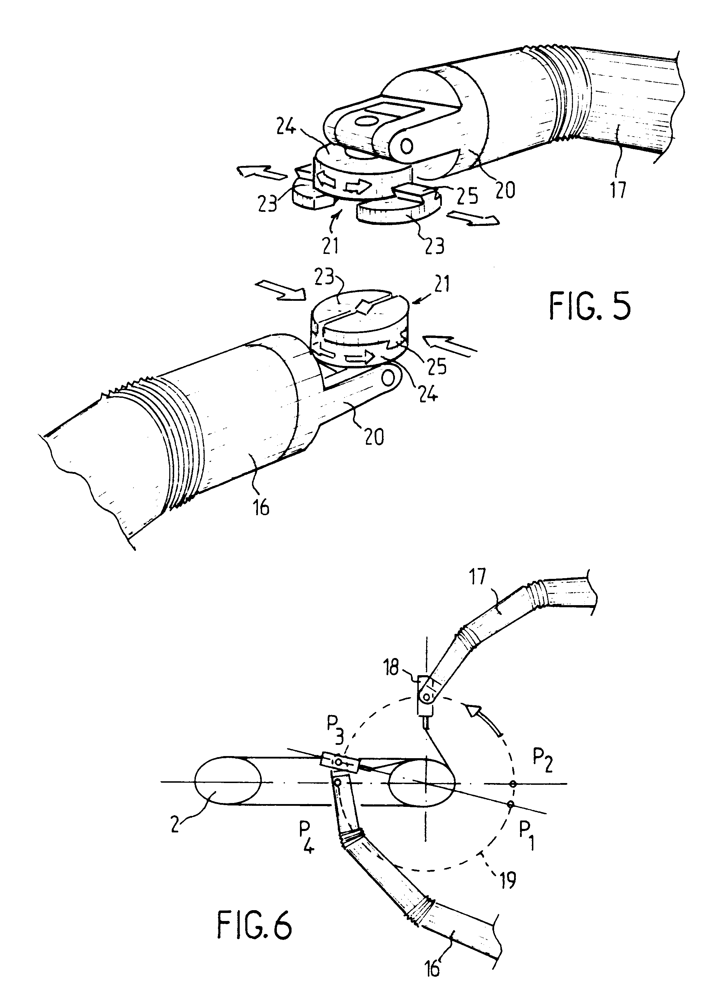

Le dispositif de maintien du mandrin illustré à la figure 2 pourrait être réalisé de façon différente, par exemple comme représenté à la figure 4 à l'aide de bras 14 au moins au nombre de quatre qui serrent le mandrin 2 par des galets de maintien 15, l'ensemble bras-mandrin pouvant tourner autour d'un axe 16 mobile par rapport au bâti support voisin. Un mécanisme serait prévu pour que les bras s'escamotent à tour de rôle au moment de la dépose du fil . On a représenté en pointillé un bras 14 prenant une position écartée à ce moment. Il faut donc prévoir au moins un certain nombre de bras pour tenir le mandrin et lui faire effectuer sa rotation, sans qu'il soit déséquilibré quand un des bras s'escamote.

Le mandrin étant ainsi maintenu par exemple grâce aux supports selon la figure 2, on va décrire maintenant le dispositif pour lui appliquer l'enroulement filamentaire. Le principe mis en oeuvre, illustré par la figure 3, s'apparente à celui de la mise en place d'une bande de pansement autour d'un membre dont le mouvement naturel consiste pour l'utilisateur, à faire passer la bande enroulée d'une main dans l'autre tout en dévidant ladite bande pour l'appliquer par enroulement sur le membre. En l'occurence le dispositif pour appliquer le bobinage filamentaire doit reproduire ces mouvements, aussi il utilise au moins deux bras de robot 16, 17, pilotés par un dispositif préprogrammé, qui supportent à tour de rôle une cassette 18 de distribution de fibre, chacun des bras effectuant une partie de l'enroulement sur le mandrin, avant que la cassette ne soit reprise par l'autre bras et n'assure l'autre partie de l'enroulement complet, la combinaison du mouvement des deux bras et le transfert de la cassette de l'un à l'autre permettant l'application en continu de fibres sur le mandrin 2 selon le plan de rotation 19. Les extrémités des bras de robot 16 et 17 sont représentées plus en détail à la figure 5. Ils se terminent par un manchon tournant 20 sur lequel est montée une pince 21 à ouverture et fermeture préprogrammée destinée à se saisir d'un des deux axes de préhension d'une cassette. Sur le manchon du bras supérieur 17 la pince est représentée ouverte tandis que sur le manchon du bras inférieur 16 elle est représentée fermée. Chaque pince 21 comporte deux parties demi-circulaires 23 susceptibles de s'écarter ou de se rapprocher, parties qui sont soutenues par un support tournant 24 avec lequel elles coopèrent grâce à une liaison coulissante 25 ; la fermeture ou l'ouverture est commandée par un mécanisme non représenté. Ainsi quand la pince d'un bras se ferme l'autre s'ouvre et la cassette peut passer d'un bras à l'autre. Cette opération peut se faire cassette arrêtée et mandrin arrêté. Néanmoins, avantageusement, le transfert peut se faire sans immobilisation de cassette, celle-ci restant en mouvement comme l'illustre le schéma de fonctionnement du transfert représenté à la figure 6.

On voit que la cassette doit effectuer une rotation continue sur le parcours d'enroulement 19, autour du mandrin 2. Pendant que le bras 17 effectue sa partie de bobinage entre le point P₁ et le point P₃ qui lui est diamétralement opposé, c'est-à-dire en couvrant la moitié du parcours 19 et par conséquent la moitié du mandrin, l'autre bras 16 sera revenu sans cassette du point P₂ au point P₃ à une vitesse plus élevée pour être en position au point P₃ pour saisir la cassette libérée par le bras 17. Les deux bras 16 et 17 effectuent ensemble, l'un au dessus de l'autre un petit parcours commun entre P₃ et P₄. Durant ce parcours la pince du bras 16 se ferme sur un axe de préhension de la cassette puis l'autre pince du bras 17 s'ouvre libérant l'autre axe. A partir de P₄ la cassette entraînée par le bras 16 jusqu'au point P₂ effectue l'autre moitié du bobinage. Le bras 17 étant revenu en P₁, le transfert de la cassette du bras 16 au bras 17 se fera de façon analogue durant le parcours commun P₁-P₂. On obtient ainsi une rotation continue de la cassette 18 autour du mandrin, à vitesse constante, et indexée sur la rotation dudit mandrin.

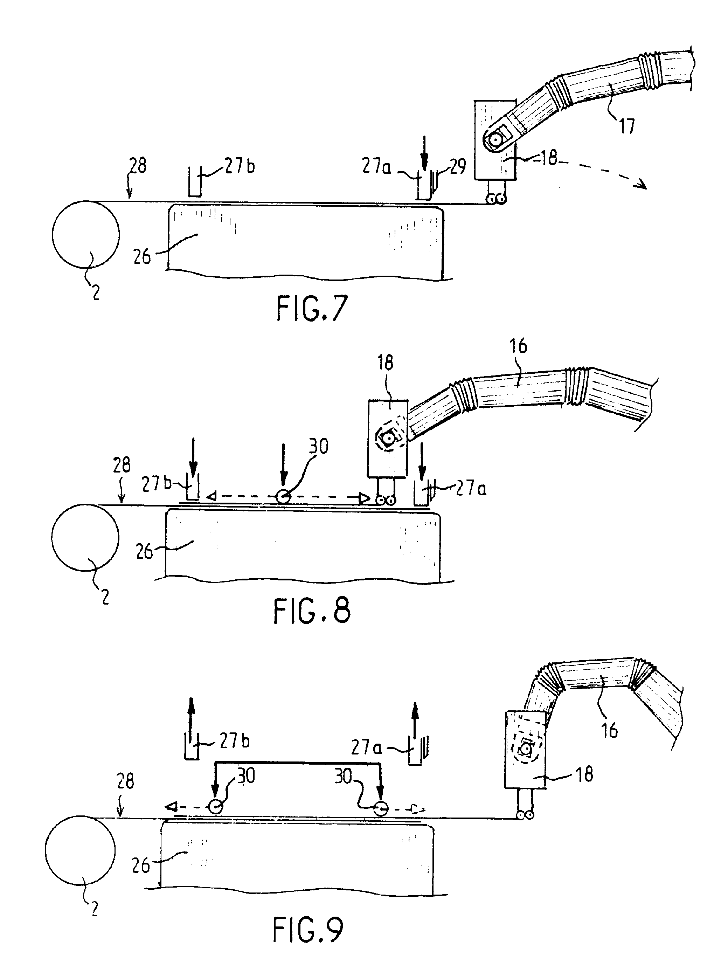

Les cassettes de distribution ne pouvant renfermer une quantité inépuisable de fils, quand les enroulements sont importants, il convient de prévoir le remplacement d'une cassette vide par une pleine. Il faut à ce moment là assurer la liaison entre le fil appliqué sur le mandrin et celui de la cassette neuve. Cela s'effectue au poste de liaison représenté aux figures 7 à 9. Le poste comprend essentiellement un plateau 26 encadré de deux pinces 27 susceptibles d'appliquer le fil 28 et le maintenir contre le plateau. A proximité d'une des pinces 27 est placé un coupe-fil 29.

Quand on veut relier un fil 28 provenant de la pièce à bobiner (mandrin 2) au fil d'une cassette neuve maintenue par un bras de robot, on commence par serrer une section de fil 28 contre le plateau 26 par la pince 27a le plus éloignée du mandrin 2 (figure 7). Puis on coupe l'extrémité débordante de fil entre pince et cassette à l'aide du coupe-fil 29. La cassette vide ou presque vide 18 maintenue par le bras de robot 17 peut alors être dégagée vers un lieu de stockage prévu à cet effet. Pendant ce temps un autre bras de robot 16 va saisir une cassette pleine 18 dans un présentoir et l'amener au poste de liaison. L'extrémité du fil libre pendant de cette cassette sera amenée sur le plateau jusqu'à l'autre pince 27b la plus proche du mandrin 2 pour y être maintenue et ainsi cette portion de fil reposera sur l'autre portion précédente, un guidage pouvant favoriser leur superposition (figure 8). Les deux fils étant ainsi superposés, le deuxième fil étant par ailleurs, également maintenu par la cassette elle-même, une roulette 30 constituant l'organe applicateur vient alors rouler sur les fils pour assurer leur collage, par exemple en distribuant entre eux un adhésif approprié. Puis les pinces 27a et 27b se dégagent du plateau 26. La cassette neuve 18 s'écarte ensuite du plateau 26 (figure 9) ce qui permet de compléter le collage des fils, à l'aide de la roulette 30, sur toute la longueur du poste de liaison. Le bras 16 et sa cassette peuvent alors revenir sur la trajectoire de bobinage en avalant la partie des fils collés grâce à un système à ressort incorporé dont dispose la cassette. Le bobinage de la pièce peut donc continuer jusqu'au prochain changement de bobine.

Grâce au dispositif précédemment décrit, on peut donc assurer tous types de bobinages.

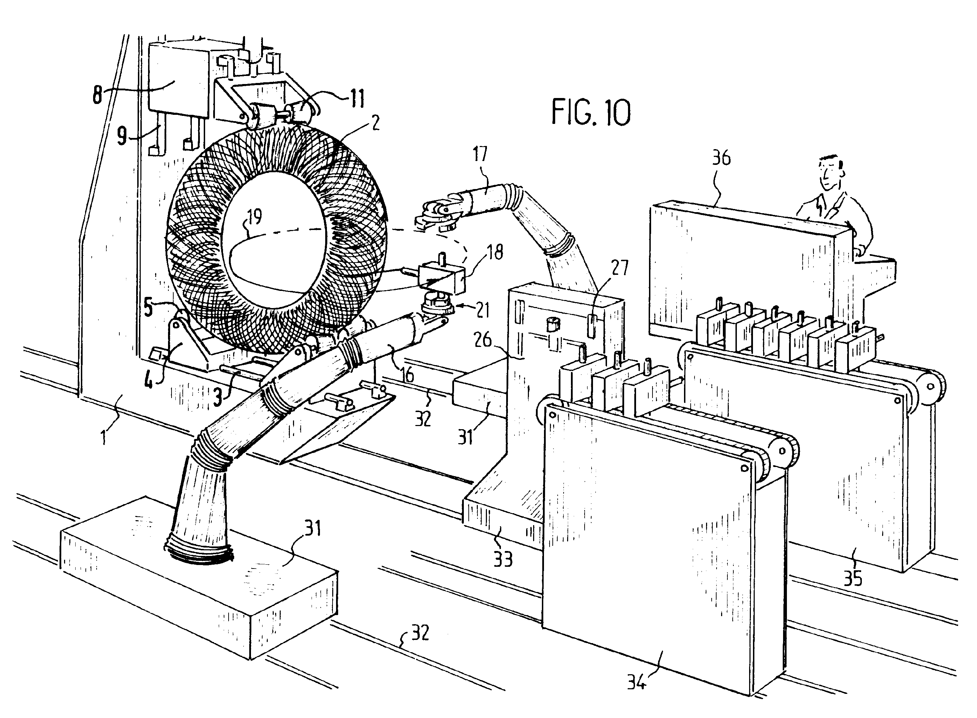

La machine à bobiner universelle telle que présentée à titre d'exemple à la figure 10 permet de s'adapter à plusieurs types de mandrin et d'assurer un bobinage en mettant en application le dispositif décrit. On reconnaît sur cette figure le bâti 1 en forme de L permettant de supporter le mandrin 2 comme décrit en référence à la figure 2. Chacun des deux bras de robot 16 et 17 est monté sur un socle-support 31, déplaçable sur des rails 32, permettant aux bras de se positionner correctement par rapport au mandrin. Un poste de liaison de fils 33 également déplaçable entre les deux bras robot peut être avancé à proximité du mandrin quand il s'agit d'assurer une liaison entre fils. Le plateau 26 et les pinces 27 sont prévus sur un côté du poste 33. Enfin on prévoit à proximité un magasin 34 de cassettes vides et un autre magasin 35 de cassettes pleines, également déplaçables pour pouvoir se rapprocher du poste 33 quand on effectue une liaison. La machine est préprogrammée et commandée à partir d'un poste fixe voisin de contrôle et de commande 36.

Cette machine permet donc de réaliser tous les types de bobinages de pièces creuses de toute formes géométriques souhaitées, toriques, sphériques, cylindriques à bouts bombés, tubulaires rectilignes ou courbes. Ainsi on peut obtenir tout type de pièces nécessitant de lâcher une bobine de fil et la reprendre après avoir contourné un éventuel obstacle.

## Revendications

1. Dispositif pour appliquer un enroulement filamentaire sur un support de forme quelconque, dans lequel ledit support ou mandrin est disposé sur une machine qui lui imprime éventuellement au moins un mouvement et selon lequel au moins une bobine de distribution de fil est montée sur un support animé d'un mouvement relatif par rapport au mandrin pour que le fil soit enroulé sur ledit support selon une trajectoire résultant de la combinaison du mouvement du mandrin et du mouvement de la bobine de distribution, caractérisé en ce qu'il met en oeuvre seulement deux bras de robot (16, 17) pilotés par un système préprogrammé, qui supportent à tour de rôle une cassette (18) de distribution de fil, l'un des bras (16) pourvu de la cassette effectuant une partie d'un parcours d'enroulement (19) autour du mandrin (2) au terme duquel la cassette est transférée à l'autre bras (17) qui effectue l'autre partie dudit parcours jusqu'au point de départ du premier bras, de telle sorte que le fil soit enroulé sur tout le pourtour du mandrin (2) selon un mouvement qui s'apparente à la mise en place d'une bande de pansement autour d'un membre quand on fait passer la bande enroulée d'une main dans l'autre en dévidant ladite bande.

2. Dispositif selon la revendication 1, caractérisé en ce que chaque bras de robot (16, 17) se termine par une pince (21) à ouverture et fermeture préprogrammée destinée à se saisir d'un des deux axes de préhension (22) de la cassette (18).

3. Dispositif selon la revendication 2, caractérisé en ce que l'extrémité de chaque bras de robot (16, 17) se termine par un manchon tournant (20) sur lequel est monté un support tournant (24) de la pince (21), coopérant avec deux parties demi-circulaire (23) susceptibles de s'écarter ou de se rapprocher.

4. Dispositif selon la revendication 1, caractérisé en ce que les deux bras de robot (16, 17) effectuent ensemble, l'un au-dessus de l'autre, un petit parcours commun (P₁ P₂) et (P₃ P₄) en deux zones opposées du parcours d'enroulement complet (19), pour permettre le transfert de la cassette (18) d'un bras à l'autre sans interrompre l'enroulement.

5. Dispositif selon la revendication 1, caractérisé en ce que le mandrin (2) est supporté par deux jeux de deux galets motorisés (5), et maintenu à sa partie supérieure par des galets d'appui et de guidage (11) rappelés contre lui et mobiles sur des coulisseaux verticaux (9).

6. Dispositif selon la revendication 1, caractérisé en ce qu'on prévoit un poste de liaison pour le collage des fils de cassette, qui consiste en un plateau (26) encadré de deux pinces (27) pouvant appliquer les fils (28) et les maintenir contre le plateau,en un coupe-fil (29) et en un organe applicateur (30) pouvant s'appliquer sur les fils superposés pour assurer leur adhésion.

7. Dispositif selon la revendication 6, caractérisé en ce que l'organe applicateur est une roulette 30 apte éventuellement à distribuer entre les fils un adhésif approprié.

8. Machine à bobiner universelle comportant l'application du dispositif selon l'une des revendications 1 à 7, caractérisée en ce qu'elle comporte au moins deux bras de robot (16, 17) montés chacun sur un socle support (31) à proximité d'un bâti (1) supportant le mandrin (2), les bras de robot étant pilotés par un dispositif préprogrammé et supportant à tour de rôle une cassette (18) de distribution de fil pour lui faire effectuer en un mouvement continu le parcours d'enroulement (19) autour dudit mandrin, en ce qu'elle comporte également un poste de liaison des fils (33), permettant d'assurer le collage des fils, et des magasins (34 et 35) pour les cassettes vides ou pleines, desservis par les bras de robot.

9. Machine selon la revendication 8, caractérisée en ce que les socles support (31) sont déplaçables sur des rails (32) pour le positionnement variable des bras par rapport au bâti.

10. Machine selon la revendication 8, caractérisée en ce que le support du mandrin (2) est un bâti (1) en forme de L à la base duquel des galets (5) porteurs du mandrin (2), motorisés, sont montés par l'intermédiaire d'étriers (4) sur des coulisseaux (3).

11. Machine selon l'une des revendications 8 ou 10, caractérisée en ce que sur la partie verticale du bâti (1) est fixée une potence (8) se déplaçant sur les coulisseaux verticaux (9) et qui porte des galets (11) d'appui et de guidage du mandrin (2).

12. Machine selon la revendication 8, caractérisée en ce que le poste de liaison des fils (33) est déplaçable entre les bras de robot (16, 17) et en ce qu'il porte sur le côté le plateau (26) pour le collage des fils ainsi que ses pinces (27) et l'organe applicateur.

## Patentansprüche

1. Vorrichtung zum Aufwickeln von fadenförmigem Material auf einen Träger beliebiger Form, bei der der Träger oder Wickeldorn auf einer Maschine angeordnet ist, die ihn gegebenenfalls in wenigstens eine Bewegung versetzt, und gemäß der wenigstens eine Fadenabgaberolle auf einem Träger angebracht ist, der zu einer Bewegung relativ zum Wickeldorn angetrieben wird, damit der Faden auf den Träger gemäß einer Bahnkurve gewickelt wird, die sich aus der Kombination der Wickeldornbewegung und der Fadenabgaberollenbewegung ergibt, dadurch gekennzeichnet, daß sie lediglich zwei durch ein vorprogrammiertes System gesteuerte Roboterarme (16, 17) vorsieht, die abwechselnd eine Fadenabgabekassette (18) halten, wobei der eine, mit der Kassette versehene Arm (16) einen Teil einer Aufwickelbahnkurve (19) um den Wickeldorn (2) herum ausführt, an deren Endpunkt die Kassette an den anderen Arm (17) übergeben wird, der den anderen Teil der Bahnkurve bis zum Anfanspunkt des ersten Arms derart ausführt, daß der Faden über den gesamten Umfang des Wickeldorns (2) in einer Bewegung gewickelt wird, die mit dem Anlegen eines Verbandsstreifens um ein Körperglied herum verwandt ist, wenn man den aufgewickelten Streifen unter Abwickeln des Streifens von einer Hand in die andere gleiten läßt.

2. Vorrichtung nach Anspruch 1, dadurch gekennzeichnet, daß jeder Roboterarm (16, 17) in einer vorprogrammierten Klemmvorrichtung (21) zum Öffnen und Schließen endet, die dazu vorgesehen ist, einen der zwei Greifbolzen (22) der Kassette (18) zu fassen.

3. Vorrichtung nach Anspruch 2, dadurch gekennzeichnet, daß das Ende jedes Roboterarms (16, 17) in einer drehbaren Hülse (20) endet, auf der ein drehbarer Träger (24) der Klemmvorrichtung (21) angebracht ist, der mit zwei halbkreisförmigen Teilen (23) zusammenwirkt, welche dazu befähigt sind, voneinander weg oder aufeinander zu zu laufen.

4. Vorrichtung nach Anspruch 1, dadurch gekennzeichnet, daß die zwei Roboterarme (16, 17) zusammen, der eine oberhalb des anderen, eine kurze gemeinsame Bahnkurve (P₁ P₂) und (P₃ P₄) in zwei gegenüberliegenden Bereichen der vollständigen Aufwickelbahnkurve (19) ausführen, um die Übergabe der Kassette (18) von einem Arm an den anderen ohne Unterbrechung der Aufwicklung zu ermöglichen.

5. Vorrichtung nach Anspruch 1, dadurch gekennzeichnet, daß der Wickeldorn (2) durch zwei Sätze zweier motorisierter Rollen (5) getragen und an seinem oberen Teil durch Stütz- und Führungsrollen (11) gehalten wird, die gegen ihn anliegen und in vertikalen Gleitschienen (9) beweglich sind.

6. Vorrichtung nach Anspruch 1, dadurch gekennzeichnet, daß man eine Verbindungsstation zum Verkleben der Fäden aus der Kassette vorsieht, die aus einer Platte (26), die von zwei Klemmen (27) eingerahmt ist, welche die Fäden (28) festhalten und sie gegen die Platte halten können, aus einem Fadenschneider (29) und aus einer Appliziereinrichtung (30) besteht, die auf die übereinanderliegenden Fäden aufgelegt werden kann, um ihren Klebeverbund sicherzustellen.

7. Vorrichtung nach Anspruch 6, dadurch gekennzeichnet, daß die Appliziereinrichtung eine Rolle (30) ist, die fähig ist, gegebenenfalls einen geeigneten Klebstoff zwischen den Fäden zu verteilen.

8. Universelle Aufwickelmaschine, welche die Vorrichtung nach einem der Ansprüche 1 bis 7 verwendet, dadurch gekennzeichnet, daß sie mindestens zwei Roboterarme (16, 17) umfaßt, die jeweils auf einem Tragsockel (31) in der Nähe eines den Wickeldorn (2) haltenden Rahmens (1) angebracht sind, wobei die Roboterarme durch eine vorprogrammierte Vorrichtung gesteuert werden und abwechselnd eine Fadenabgabekassette (18) halten, um sie in einer kontinuierlichen Bewegung die Aufwickelbahnkurve (19) um den Wickeldorn herum zurücklegen zu lassen, und dadurch daß sie des weiteren eine Fadenverbindungsstation (33), die es ermöglicht, das Verkleben der Fäden sicherzustellen, sowie Magazine (34 und 35) für die leeren oder vollen Kassetten umfaßt, die durch die Roboterarme bedient werden.

9. Maschine nach Anspruch 8, dadurch gekennzeichnet, daß die Tragsockel (31) zur variablen Positionierung der Arme gegenüber dem Rahmen auf Schienen (32) verschiebbar sind.

10. Maschine nach Anspruch 8, dadurch gekennzeichnet, daß der Träger des Wickeldorns (2) ein L-förmiger Rahmen (1) ist, an dessen Basis die motorisierten, tragenden Rollen (5) für den Wickeldorn (2) über Bügel (4) auf Gleitschienen (3) angebracht sind.

11. Maschine nach Anspruch 8 oder 10, dadurch gekennzeichnet, daß auf dem vertikalen Teil des Rahmens (1) ein Tragarm (8) befestigt ist, der sich auf den vertikalen Schienen (9) bewegt und der die Stütz- und Führungsrollen (11) für den Wickeldorn (2) trägt.

12. Maschine nach Anspruch 8, dadurch gekennzeichnet, daß die Fadenverbindungsstation (33) zwischen den Roboterarmen (16, 17) verschiebbar ist und dadurch, daß sie seitlich die Platte (26) für das Verkleben der Fäden sowie ihre Klemmen (27) und die Appliziereinrichtung trägt.

## Claims

1. Device for applying a filament winding to a support of any shape, wherein the said support or mandrel is placed on a machine which imparts thereto, optionally, at least one movement and according to which at least one thread dispensing reel is mounted on a support caused to execute a movement relative to the mandrel so that the thread is wound onto the said support along a path resulting from the combination of the movement of the mandrel and the movement of the dispensing reel, characterised in that it utilises only two robot arms (16, 17) controlled by a pre-programmed system and each in turn supporting a thread dispensing cassette (18), one of the arms (16) provided with the cassette travelling over one part of a winding path (19) about the mandrel (2) at the end of which the cassette is transferred to the other arm (17) which travels over the other part of the said path up to the point of departure of the first arm, in such a way that the thread is wound round the entire periphery of the mandrel (2) in a movement which is analogous to the winding of a bandage round a limb when the rolled bandage is passed from one hand to the other as the said bandage is unwound.

2. Device according to Claim 1, characterised in that each robot arm (16,17) ends in a pincer (21) with preprogrammed opening and closing, designed to seize one of the two gripping spindles (22) of the cassette (18).

3. Device according to Claim 2, characterised in that the end of each robot arm (16,17) ends in a rotary sleeve (20) on which is mounted a rotary support (24) of the pincer (21), co-operating with two semi-circular portions (23) capable of moving apart or coming together.

4. Device according to Claim 1, characterised in that the two robot arms (16,17) travel together, one above the other, over a short common path (P₁ P₂) and (P₃ P₄) in two opposite zones of the complete winding path (19), to permit the transfer of the cassette (18) from one arm to the other without interrupting the winding operation.

5. Device according to Claim 1, characterised in that the mandrel (2) is supported by two sets of two motor-driven rollers (5) and held in its upper part by supporting and guiding rollers (11) which are urged against it and are movable on vertical slides (9).

6. Device according to Claim 1, characterised in that a joining station is provided for bonding together the cassette threads, which station consists of a plate (26) framed by two grippers (27) capable of pressing the threads (28) and holding them against the plate, and which also consists of a thread cutter (29) and an applicator member (30) that can be applied to the superposed threads to ensure their adhesion.

7. Device according to Claim 6, characterised in that the applicator member is a roller (30) optionally capable of distributing a suitable adhesive between the threads.

8. Universal winding machine comprising the application of the device according to one of Claims 1 to 7, characterised in that it comprises at least two robot arms (16, 17), each mounted on a support base (31) in the vicinity of a frame (1) supporting the mandrel (2), the robot arms being controlled by a pre-programmed device and supporting each in turn a thread dispensing cassette (18) to cause it to travel in a continuous movement along the winding path (19) round the said mandrel, and in that it also comprises a thread joining station (33), permitting the bonding of the threads, and magazines (34 and 35) for the empty or full cassettes, served by the robot arms.

9. Machine according to Claim 8, characterised in that the support bases (31) are movable on rails (32) for the variable positioning of the arms in relation to the frame.

10. Machine according to Claim 8, characterised in that the support of the mandrel (2) is an L-shaped frame (1), on the base of which frame motor-driven rollers (5) for carrying the mandrel (2) are mounted by way of yokes (4) on slides (3).

11. Machine according to one of Claims 8 or 10, characterised in that on the vertical portion of the frame (1) is fixed a jib (8) moving on vertical slides (9) and which carries rollers (11) for supporting and guiding the mandrel (2).

12. Machine according to Claim 8, characterised in that the thread joining station (33) is movable between the robot arms (16, 17) and in that it carries on the side the plate (26) for the bonding of the threads, as well as its grippers (27) and the applicator member.
